# EUROPÄISCHE PATENTSCHRIFT

(11) **EP 0 783 778 B1**
(45) Veröffentlichungstag und Bekanntmachung des Hinweises auf die Patenterteilung: **31.07.2002**
(21) Anmeldenummer: 95920852.1
(22) Anmeldetag: 22.05.1995
(51) Int. Cl.: H01R 13/66

(54) **STECKER FÜR GASGENERATOREN VON GASSACK-AUFPRALL-SCHUTZEINRICHTUNGEN SOWIE VERFAHREN ZU SEINER HERSTELLUNG**
PLUG FOR GAS GENERATORS OF AIR BAG IMPACT PROTECTION SYSTEMS AND PROCESS FOR PRODUCING THE SAME
CONNECTEUR A FICHES POUR GENERATEURS DE GAZ DE DISPOSITIFS DE PROTECTION CONTRE LES IMPACTS PAR AIRBAG ET SON PROCEDE DE FABRICATION

(43) Veröffentlichungstag der Anmeldung: 16.07.1997
(73) Patentinhaber: TAKATA - PETRI Aktiengesellschaft, 63743 Aschaffenburg (DE)
(72) Erfinder: ZELLER, Gregor, D-63743 Aschaffenburg (DE); BONN, Helmut, D-63808 Heibach (DE)
(74) Vertreter: Maikowski, Michael, Dipl.-Ing. Dr.
(86) Internationale Anmeldenummer: EP9501932
(87) Internationale Veröffentlichungsnummer: WO9637928

(56) Entgegenhaltungen:
- EP-A- 0 600 418
- DE-A- 2 509 856
- DE-A- 3 816 024
- DE-A- 4 310 369
- GB-A- 2 267 188
- US-A- 4 109 992
- US-A- 5 244 418

## Beschreibung

Die Erfindung geht aus von einem Stecker für Gasgeneratoren von Gassack-Aufprall-Schutzeinrichtungen gemäß dem Oberbegriff des Patentanspruches 1.

Es ist aus der DE-A-43 10 369 ein Generator-Stecker mit einem im wesentlichen gestreckten Gegenstrompfad und einem zweiteiligen Strompfad bekannt geworden, von denen der eine Teil U-förmig ausgebildet ist und dessen Teile sich derart beidseitig des Gegenstrompfades erstrecken, daß insgesamt vier sich gleichgerichtet parallel zueinander erstreckende Zeige gebildet sind, von denen die beiden inneren Zweige zu den externen Steckerstiften gebogen sind und die beiden äußeren Zweige als innere Steckerstifte zum Aufstecken der Drosselspule dienen. Der bekannte Steckverbinder ist aufgrund der - unter Einbeziehung der Drosselspule - zweifach U-förmigen, den Gegenstrompfad umfassenden Gestaltung des Strompfades konstruktiv und herstellungstechnisch aufwendig, nimmt insbesondere aufgrund seiner Konstruktionsbreite einen erheblichen Platz in Anspruch.

Das gleiche gilt für die aus der EP-A-0 600 418 bekannt gewordene Anordnung, bei der es sich um einen Generatorstecker mit drei parallelen externen Steckerstiften handelt, von denen die beiden äußeren Steckerstifte mittels der Drosselspule zu elektrisch zu einer einheit verbunden sind.

Der vorliegenden Erfindung liegt als Aufgabe die Schaffung eines konstruktiv einfachen und weitestgehend automatisiert herstellbaren Stromleiters für Stecker der beschriebenen Art zugrunde.

Diese Aufgabe wird mit einem Stromleiter mit den im Patentanspruch 1 wiedergegebenen Merkmalen gelöst.

Durch die Erfindung ist ein Stecker für den beschriebenen zweck geschaffen, der einschließlich der inneren und äußeren elektrischen Verbindungen vollautomatisiert hergestellt werden kann.

Weitere Einzelheiten der in den Patentansprüchen gekennzeichneten Erfindung werden nachstehend anhand der beigefügten Zeichnung erläutert. Es zeigen
- Fig. 1: eine schematische Wiedergabe der Herstellungsstufen des Leiters für einen Stecker in perspektivischer Darstellung
- Fig. 2: den Stecker in Sprengdarstellung

Der in der Zeichnung wiedergegebene, der Herstellung der Verbindung zwischen einer Spannungsquelle und dem Zünder für den Gasgenerator einer Gassack-Aufprall-Schutzeinrichtung dienende Stecker besteht aus einem Gehäuse 12 sowie den von Blechstreifen gebildeten Strompfaden 1, 2, 3, 4 sowie einer Drosselspule 5 in dem stromführenden Pfad 1, 2, 3. Dieser Strompfad ist im wesentlichen U-förmig ausgebildet, wobei der dem anderen (Gegen)-Strompfad 4 abgewendete Zweig 1, 2 den zum Zwecke der Bildung innerer Pole unterbrochenen Strompfad bildet, der gleichzeitig als Träger für die Drosselspule 5 dient. Die Drosselspule 5 ist in einem Gehäuse oder auf einem Träger angeordnet, das mit unmittelbar mit den Polen 1, 2 verbindbaren elektrischen Anschlüssen versehen ist. Der andere, dem Gegenstrompfad 4 benachbarte Zweig 3 sowie der Gegenstrompfad 4 selbst bilden die nach Außen geführten Steckerstifte 6, 7.

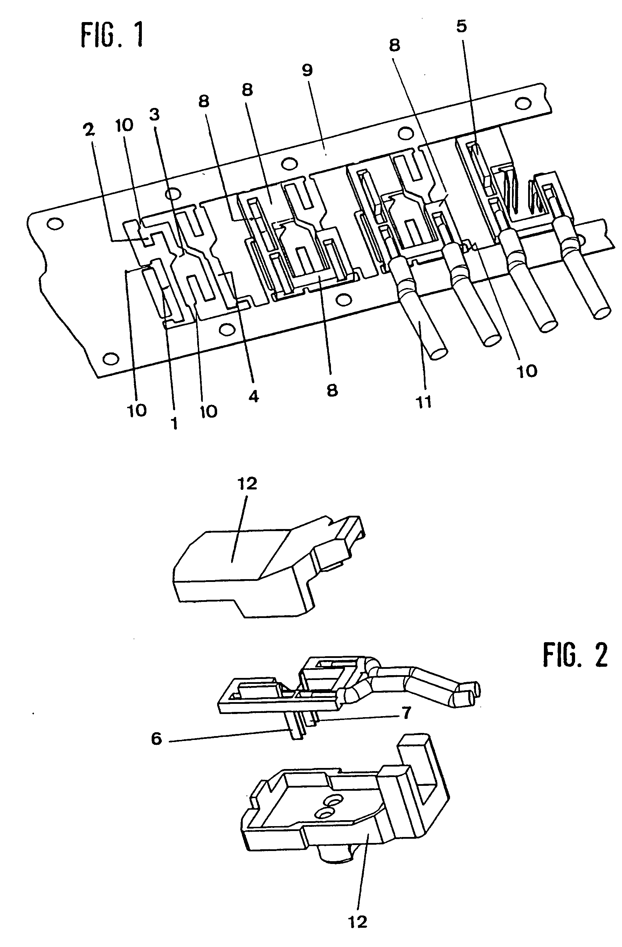

Die Herstellung des Steckers erfolgt in der Weise, daß zunächst durch Ausstanzen aus einem Blechband 9 eine Vorform hergestellt wird, in der die Pole bzw. Strompfade 1, 2, 3, 4 rapportartig wiederkehrend untereinander unverbunden derart gehalten sind, daß die der Bildung der Steckerstifte 6, 7 dienenden gabelförmigen Enden der Zweige 3, 4 nebeneinander und einander umgreifend in einander entgegengesetzter Richtung angeordnet sind (Stufe I in Fig. 1). Das Band wird nach dem Ausstanzen taktweise in eine sich an die Stanzeinrichtung anschließende Spritzgußform geführt, in der die Elemente unter Freilassung der der Stromverbindung dienenden Bereiche in einen gemeinsamen Träger 8 eingebettet werden (Stufe II in Fig. 1), worauf in der darauffolgenden Fertigungsstufe die in einem Gehäuse vorgefertigt mit angepaßten Stromanschlüssen versehene Drosselspule 5 ebenfalls automatisch eingelötet wird (Stufe III in Fig. 1). In dieser Fertigungsstufe werden ebenfalls die äußeren Vebindungsleitungen 11 durch Löten angebracht. Es erfolgt schließlich in einer weiteren Fertigungsstufe die Bildung der Steckerstifte 6 und 7, die aus den zu diesem Zweck gabelförmig ausgebildeten Enden der Pole 3 und 4 derart geformt werden, daß die beiden Gabelzweige einerseits in Verlängerung ihrer inneren Kante aufgebogen und andererseits um eine Querachse gleichsinnig aus der Blechebene ausgebogen werden. Infolge ihrer in der Vorform einander umgreifenden Lage gelangen sie beim Ausbiegen in die für Steckerstifte erforderliche parallele Stellung.

Das stromführende Element ist damit in vollautomatisierter Herstellungsweise fertiggestellt und kann aus dem Blechband durch Schneiden seiner Haltestege (10) getrennt werden und unmittelabr in das entsprechend ausgebildete Gehäuse 12 (Fig. 2) eingesteckt werden.

## Patentansprüche

1. Stecker für Gasgeneratoren von Gassack-Aufprall-Schutzeinrichtungen mit einem U-förmig ausgebildeten Strompfad (1, 2, 3) und einem Gegenstrompfad (4), die beide von einem Blechstreifen gebildet sind, wobei der Gegenstrompfad (4) und der ihm benachbarte Zweig (3) des Strompfades (1, 2, 3) zur Bildung der nach Außen geführten Steckerstifte (6, 7) abgewinkelt sind, ***dadurch gekennzeichnet, daß*** die die Strompfade bildenden Teile (1; 2, 3; 4) in einem gemeinsamen, die der Stromverbindung dienenden Bereiche freilassenden Träger (8) derart gehalten sind, daß ihre in die Steckerstifte (6, 7) übergehenden Zweige (3, 4) in einander entgegengesetzte Richtung weisen, wobei der derart gebildete Stromleiter in den Boden des Steckergehäuses (12) eingesteckt ist.

2. Stecker für Gasgeneratoren nach Anspruch 1, ***dadurch gekennzeichnet, daß*** der äußere Zweig (1, 2) des U-förmigen Strompfades (1, 2, 3) unterbrochen ist und als mechanischer Träger für die die Unterbrechung elektrisch überbrückende Drosselspule (5) dient.

3. Stecker für Gasgeneratoren nach Anspruch 1, ***dadurch gekennzeichnet, daß*** die Steckerstifte (6, 7) durch Aufbiegen aus den zu diesem Zweck T- bzw. gabelförmig ausgebildeten Enden der Strompfade (3, 4) gebildet sind.

4. Verfahren zur Herstellung eines Steckers nach Anspruch 1, ***dadurch gekennzeichnet, daß*** zunächst durch Ausstanzen aus einem Blechband (9) eine Vorform hergestellt wird, in der die Pole bzw. Strompfade (1, 2, 3, 4) rapportartig wiederkehrend untereinander unverbunden derart gehalten sind, daß die der Bildung der Steckerstifte (6, 7) dienenden T- bzw. gabelförmigen Enden nebeneinender und einander umgreifend in einander entgegengesetzter Richtung angeordnet sind, worauf die Elemente in einer Spritzgußform unter Freilassung der der Stromverbindung dienenden Bereiche in einen gemeinsamen Träger (8) eingebettet und die Drosselspule (5) mit ihrem Strompfed (1, 2), du als Träger dient mechanisch und elektrisch verbunden werden, worauf die Stromanschlüsse durch Schneiden und Verformen in ihre Gebrauchsform gebracht und der so fertiggestellte Stromleiter aus dem Blechband ausgebrochen und in das Steckergehäuse (12) eingesteckt wird.

## Claims

1. Plug connector for gas generators of gas bag impact protection systems having a U-shaped current carrying path (1, 2, 3) and a counter current carrying path (4) which are both formed from a sheet metal strip wherein the counter current carrying path (4) and the branch (3) of the current carrying path (1, 2, 3) adjoining same are bent to form the outwardly directed plug pins (6, 7), **characterised in that** the parts (1, 2, 3, 4) forming the current carrying paths are held in a common support (8) which exposes the areas serving for current connection so that the branches (3, 4) of the current paths which change into the plug pins (6, 7) point in opposite directions, wherein the thus formed current conductor is inserted in the bottom of the plug housing (12).

2. Plug connector for gas generators according to claim 1 **characterised in that** the outer branch (1, 2) of the U-shaped current path (1,2, 3) is interrupted and serves as a mechanical support for the choking coil (5) which electrically bridges the break.

3. Plug connector for gas generators according to claim 1 **characterised in that** the plug pins (6, 7) are formed by bending up the ends of the current paths (3, 4) which for this purpose are formed T- or fork-shaped.

4. Method for manufacturing a plug connector according to claim 1 **characterised in that** first a sheet metal strip (9) is punched out to produce a preform in which the poles or current paths (1, 2, 3, 4) are held unconnected with each other in repeated relationship so that the T- or fork-shaped ends which serve to form the plug pins (6, 7) are arranged side by side engaging round each other in opposite directions, whereupon the elements are embedded in a common support (8) in an injection mould whilst leaving free the areas which serve for the current connection and the choking coil (5) is connected mechanically and electrically to its current path (1, 2) which serves as support, whereupon the current contacts are then brought to their useful shape by cutting and deforming, and the current conductor thus produced is broken off from the sheet metal strip and inserted in the plug connector housing (12).

## Revendications

1. Connecteur à fiches pour générateurs de gaz de dispositifs de protection contre les impacts par airbag et son procédé de fabrication avec un circuit de courant en forme de U (1, 2, 3) et un circuit de contre-courant (4) formés tous deux par un ruban de tôle, le circuit de contre-courant (4) et la branche (3) du circuit de courant (1, 2, 3) adjacente au circuit de contre-courant étant courbés pour former les pointes de contact dirigées vers l'extérieur (6, 7), ***caractérisé en ce que*** les éléments (1, 2, 3, 4) qui forment les circuits de courant sont enserrés dans un support (8) commun qui laisse libre les zones servant à la liaison électrique de façon que leurs branches (3, 4) qui se terminent en pointes de contact (6, 7) partent dans des directions opposées, le conducteur de courant ainsi formé étant enfiché dans le sol du boîtier du connecteur (12).

2. Connecteur à fiches pour générateurs de gaz selon la revendication 1, ***caractérisé en ce que*** la branche externe (1, 2) du circuit de courant en forme de U (1, 2, 3) est interrompue et sert de support mécanique pour la bobine de self (5) qui court-circuite électriquement l'interruption.

3. Connecteur à fiches pour générateurs de gaz selon la revendication 1, ***caractérisé en ce que*** les pointes de contact (6, 7) sont formées par dépliage des extrémités du circuit de courant (3, 4) conçues en forme de té ou bifurquées à cet effet.

4. Procédé de fabrication d'un connecteur à fiches selon la revendication 1, ***caractérisé en ce que*** une préforme est découpée dans un ruban de tôle (9), préforme dans laquelle les pôles ou les circuits de courant (1, 2, 3, 4) sont placés en forme de rapport et non reliés les uns aux autres de façon que les extrémités en té ou bifurquées qui servent à former les pointes de contact (6, 7) sont disposées les unes à côté des autres et s'emboîtent les unes les autres en direction opposée, les éléments étant enrobés dans un support commun (8) dans un moule pour injection en laissant libres les zones qui servent à la liaison électrique et sont reliés mécaniquement et électriquement à la bobine de self (5) qui sert de support avec son champ électrique, puis les branchements électriques sont amenés à leur taille standard par découpage et déformation et le conducteur ainsi achevé est séparé de la bande métallique et enfiché dans le logement de prise (12).
